# EUROPEAN PATENT SPECIFICATION

(11) **EP 4 620 826 B1**
(45) Date of publication and mention of the grant of the patent: **01.07.2026**
(21) Application number: 23911379.8
(22) Date of filing: 01.11.2023
(51) Int. Cl.: B64D 37/20, B64D 37/24, B64D 37/28, B64D 37/30

(54) **FUEL SUPPLY SYSTEM, METHOD, AND HYDROGEN AIRCRAFT**
KRAFTSTOFFVERSORGUNGSSYSTEM, VERFAHREN UND WASSERSTOFFFLUGZEUG
SYSTÈME D'ALIMENTATION EN CARBURANT, PROCÉDÉ ET AÉRONEF À HYDROGÈNE

(30) Priority: 27.12.2022 US 202263477282 P
(43) Date of publication of application: 24.09.2025
(73) Proprietor: KAWASAKI JUKOGYO KABUSHIKI KAISHA, Kobe-shi, Hyogo 650-8670 (JP)
(72) Inventor: TSURU, Kazunari, Hyogo 650-8670 (JP); SASAKI, Koichi, Hyogo 650-8670 (JP); SHIMIZU, Kazuko, Hyogo 650-8670 (JP); ICHIKAWA, Shingo, Hyogo 650-8670 (JP); NODO, Ryo, Hyogo 650-8670 (JP); KUYAMA, Hiroki, Hyogo 650-8670 (JP); TANAKA, Shota, Hyogo 650-8670 (JP); SUGIURA, Hideyuki, Hyogo 650-8670 (JP); ONODERA, Jun, Hyogo 650-8670 (JP); HATTORI, Natsumi, Hyogo 650-8670 (JP)
(74) Representative: Leinweber & Zimmermann
(86) International application number: PCT/JP2023/039377
(87) International publication number: WO 2024/142595

(56) References cited:
- WO-A1-2022/211419
- WO-A1-2023/074866
- FR-A1- 3 110 936
- KR-B1- 102 414 034
- US-A1- 2014 190 187
- US-A1- 2017 291 486
- US-A1- 2018 128 210
- US-A1- 2021 316 877

## Description

### Technical Field

The present disclosure relates to a fuel distribution system of a hydrogen aircraft, a hydrogen aircraft using the fuel distribution system, and a fuel distribution method in the hydrogen aircraft.

### Background Art

A hydrogen aircraft that flies using liquid hydrogen as an energy source is known. In a hydrogen aircraft, a hydrogen fuel tank for storing liquid hydrogen has to be mounted on an airframe. Liquid hydrogen in the hydrogen fuel tank is pumped to a propulsion system such as a hydrogen engine. Here, when the internal pressure of the hydrogen fuel tank fluctuates, the discharge pressure of a pump becomes unstable, and a required amount of fuel cannot be distributed to the propulsion system on a timely basis.

Patent Literature 1 discloses a technique that controls a tank internal pressure by heating the tank of a liquefied petroleum gas (LPG) from the outside of the tank. However, in the hydrogen fuel tank, a heat insulating structure is employed for cold storage of liquid hydrogen. Therefore, the internal pressure regulating technique in Patent Literature 1 cannot be applied to a hydrogen fuel tank. Patent Literature 2 discloses a fuel distribution system for an aircraft, comprising a fuel tank storing liquid natural gas, a pressure sensor measuring the internal pressure of the tank, fuel distribution piping, a pump, first return piping with a valve and a vaporizer, and a controller controlling the valve on the basis of the measured pressure. Patent Literature 3 discloses a similar system, where the tank stores liquid hydrogen, and the controller controls the vaporizer.

### Citation List

### Patent Literature

Patent Literature 1: WO 2011/159887 A
Patent Literature 2: FR 3 110 936 A1
Patent Literature 3: US 2017/291486A1

### Summary of Invention

An object of the present disclosure is to provide a fuel distribution system and method capable of suppressing an internal pressure fluctuation of a hydrogen fuel tank, and a hydrogen aircraft using the fuel distribution system and method.

A fuel distribution system of a hydrogen aircraft from one aspect of the present disclosure includes a hydrogen fuel tank storing liquid hydrogen, a pressure sensor that measures an internal pressure of the hydrogen fuel tank, fuel distribution piping through which liquid hydrogen is delivered from the hydrogen fuel tank to a predetermined distribution destination, a pump that is disposed in the fuel distribution piping and delivers liquid hydrogen, first return piping including a path, a first regulating valve, and a fuel vaporizer, the path branching from the fuel distribution piping downstream of a disposing position of the pump and returning to the hydrogen fuel tank, the first regulating valve regulating a flow rate or pressure of liquid hydrogen, the fuel vaporizer vaporizing liquid hydrogen, and the controller that acquires a measurement value of the internal pressure of the fuel tank from the pressure sensor and controls the first
regulating valve and the fuel vaporizer.

A hydrogen aircraft from another aspect of the present disclosure includes an airframe including a fuselage and wings, at least one propulsion system fixed to the airframe, and such a fuel distribution system that supplies liquid hydrogen to the propulsion system.

### Brief Description of the Drawings

FIG. 1 is a perspective view illustrating a hydrogen aircraft on which a fuel distribution system is mounted according to the present disclosure.
FIG. 2 is a system diagram illustrating a configuration of the fuel distribution system.
FIG. 3 is a flowchart showing tank pressurization control according to a first embodiment.
FIG. 4 is a time chart illustrating an operation of each unit of the fuel distribution system in a case where the tank pressurization control is performed in the first embodiment.
FIG. 5 is a flowchart showing tank pressurization control according to a second embodiment.
FIG. 6 is a flowchart showing tank pressurization control according to a third embodiment.

### Description of Embodiments

Embodiments of a fuel distribution system for a hydrogen aircraft of the present disclosure will be described in detail below with reference to the drawings. The fuel distribution system of the present disclosure is mounted on a hydrogen aircraft that flies using hydrogen as an energy source, and supplies gaseous hydrogen or liquid hydrogen as fuel to a propulsion system of the hydrogen aircraft. The hydrogen aircraft may be used for either passenger or cargo. The propulsion system of the hydrogen aircraft is not limited as long as it uses hydrogen as an energy source. The propulsion system may be, for example, a hydrogen combustion gas turbine engine, an electric propulsive device configured by a combination of a fuel cell and an electric motor, or a hybrid propulsive device of the gas turbine engine and the electric propulsive device.

### [Outline of hydrogen aircraft]

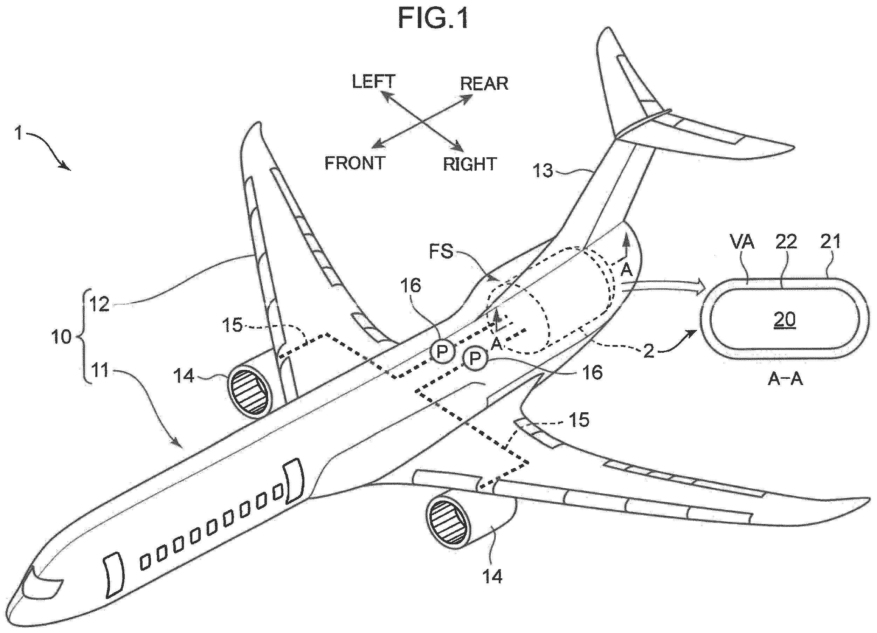

FIG. 1 is a perspective view illustrating a hydrogen aircraft 1 including a fuel distribution system FS of the present disclosure. The hydrogen aircraft 1 includes an airframe 10, engines 14, and a hydrogen fuel tank 2 mounted on a rear portion of the airframe 10. The mounting position of the hydrogen fuel tank 2 is not limited to the rear portion of the airframe 10, and can be set at an appropriate position of the airframe 10.

The airframe 10 includes a fuselage 11, a pair of right and left main wings 12, and an empennage 13. The fuselage 11 includes structural members such as a circular frame and a stringer, and a fuselage panel assembled in a cylindrical shape. The pair of main wings 12 includes a spar and a flap, and extends laterally from the fuselage 11. The empennage 13 is at the end of the fuselage 11 and includes a vertical empennage and a horizontal empennage. The engines 14 are, for example, hydrogen combustion gas turbine engines that use liquid hydrogen as fuel. The engines 14 are fixed respectively to the pair of main wings 12.

The hydrogen fuel tank 2 is a tank that stores liquid hydrogen to be fuel for the engines 14. The hydrogen fuel tank 2 is disposed in a housing section provided at the rear end of the fuselage 11. The hydrogen fuel tank 2 has a cylindrical shape elongated in a front-rear direction of the airframe 10. The hydrogen fuel tank 2 and the engines 14 are connected by distribution line 15, respectively. The distribution line 15 is fuel distribution piping. The distribution line 15 is provided with booster pumps 16, i.e., pumps that feed liquid hydrogen from the hydrogen fuel tank 2 to a predetermined distribution destination. In the present embodiment, the distribution destination is the right and left engines 14. The liquid hydrogen stored in the hydrogen fuel tank 2 is distributed to the engines 14 through the distribution line 15. The hydrogen fuel tank 2, the distribution line 15, and the booster pumps 16 constitute a part of the fuel distribution system FS.

In general, a tank storing cryogenic fluids, such as liquid hydrogen, requires advanced thermal insulation property to maintain a cryogenic state. One method for ensuring such advanced thermal insulation is to provide the tank with a vacuum double shell structure. The hydrogen fuel tank 2 of the present embodiment also has a vacuum double shell structure. As illustrated in a schematic cross-sectional view taken along line A-A in FIG. 1, the hydrogen fuel tank 2 includes an outer tank 21 and an inner tank 22 disposed inside the outer tank 21 with a space being left therebetween. The internal space of the inner tank 22 is a storage space 20 for storing liquid hydrogen. The outer tank 21 is configured to generate a heat insulation effect. The space between the inner surface of the outer tank 21 and the outer surface of the inner tank 22 is a vacuum layer VA. The vacuum layer VA is evacuated during an operation of the hydrogen fuel tank 2. Vacuum is a state of a space filled with a gas having a pressure lower than normal atmospheric pressure.

### [Issue of fuel distribution in hydrogen aircraft]

One issue is that when the conventional technique is applied to the hydrogen fuel tank 2, the internal pressure of the hydrogen fuel tank 2 is difficult to stabilize. In order to stably distribute liquid hydrogen from the hydrogen fuel tank 2 to the engines 14 through the distribution line 15, the internal pressure of the hydrogen fuel tank 2, specifically, the pressure in the storage space 20 of the inner tank 22 has to be constant. When the liquid hydrogen is discharged from the hydrogen fuel tank 2, the tank internal pressure drops as the stored liquid hydrogen decreases. When the internal pressure of the hydrogen fuel tank 2 fluctuates, the inlet pressures of the booster pumps 16 fluctuate. As a result, the discharge pressures of the booster pumps 16 also fluctuate. When the discharge pressures of the booster pumps 16 become unstable, required amount of liquid hydrogen cannot be distributed to the engines 14 on a timely basis.

As means for stabilizing the tank internal pressure, means for externally heating the tank is known. This means partially vaporizes the liquid in the tank by heating to raise the tank internal pressure. On the other hand, the hydrogen fuel tank 2 of the hydrogen aircraft 1 employs a heat insulating structure including the vacuum layer VA. For this reason, even when the hydrogen fuel tank 2 is externally heated, the tank internal pressure does not rise. Therefore, a method different from the conventional means for stabilizing the tank internal pressure has to be applied to the hydrogen fuel tank 2.

Another issue is handling of liquid hydrogen excessively distributed from the hydrogen fuel tank 2. In the hydrogen aircraft 1, the amount of liquid hydrogen required to be distributed to the engines 14 greatly fluctuates due to a variation in the operating state. The distribution amount of liquid hydrogen to the engines 14 may be about ten times different between its minimum distribution amount and its maximum distribution amount. The booster pumps 16 cannot follow such fluctuation of the required distribution amount in some cases. In particular, at the time of a requirement with the minimum distribution amount or near the minimum distribution amount, a concern that the pump efficiency is degraded too much, and thus liquefied hydrogen might be partially vaporized. For this reason, the liquefied hydrogen whose amount is larger than the amount of fuel required by the engines 14 may be discharged from the hydrogen fuel tank 2 to the distribution line 15. In this case, some treatment is required for the liquid hydrogen excessively discharged to the distribution line 15. The fuel distribution system FS of the present embodiment is a system that can solve these issues at once. The fuel distribution system FS will be described in detail below.

### [Configuration of fuel distribution system]

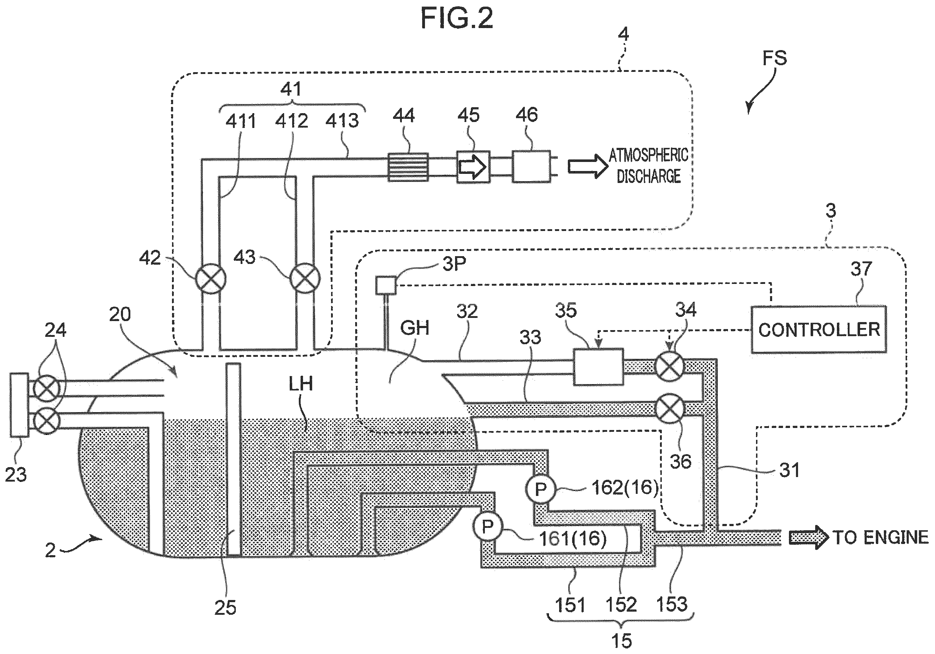

FIG. 2 is a system diagram illustrating the configuration of the fuel distribution system FS. The fuel distribution system FS is mounted on the hydrogen aircraft 1. The fuel distribution system FS is a system that supplies liquid hydrogen as fuel to the engines 14. The fuel distribution system FS includes a tank pressurizing mechanism 3 and a tank depressurizing mechanism 4 in addition to the hydrogen fuel tank 2, the distribution line 15, and the booster pumps 16. In the following description about various piping included in the fuel distribution system FS, "upstream" and "downstream" relative to the direction where liquid hydrogen flows through the piping are used.

The hydrogen fuel tank 2 is a tank including the storage space 20 where liquid hydrogen LH is stored and having a vacuum double shell structure. For simplification of illustration in FIG. 2, the hydrogen fuel tank 2 has a single shell structure. The hydrogen fuel tank 2 can be formed of, for example, a metal such as aluminum, or a composite material such as carbon fiber reinforced plastic (CFRP) or glass fiber reinforced plastic (GFRP). The shape of the hydrogen fuel tank 2 is not limited as long as a high pressure can be maintained. FIG. 2 illustrates, as an example, the hydrogen fuel tank 2 having both end portions formed in a hemispherical shape and an intermediate portion formed in a cylindrical shape. A vapor phase portion GH is located above the storage portion of the liquid hydrogen LH in the storage space 20. The vapor phase portion GH is a space occupied by a boil-off gas of the liquid hydrogen LH generated by heat input to the hydrogen fuel tank 2 or a hydrogen gas containing a vaporized gas distributed by the tank pressurizing mechanism 3.

Various accessories are attached to the hydrogen fuel tank 2. In FIG. 2, the hydrogen fuel tank 2 includes a refuel adaptor 23, a level sensor 25, and a pressure sensor 3P as the accessories. A terminal of a replenish line for replenishing the liquid hydrogen LH to the hydrogen fuel tank 2 is connected to the refuel adaptor 23. An refuel shut-off valve 24 is attached to an oil supply pipe extending from the refuel adaptor 23 to the storage space 20. The level sensor 25 is disposed in the storage space 20. The level sensor 25 measures a remaining amount of the liquid hydrogen LH. The pressure sensor 3P measures the pressure of the storage space 20, that is, the internal pressure of the hydrogen fuel tank 2.

The distribution line 15 includes a first distribution pipe 151, a second distribution pipe 152, and a main distribution pipe 153. The first distribution pipe 151 and the second distribution pipe 152 are piping drawn out in parallel from the hydrogen fuel tank 2. The upstream ends of the first distribution pipe 151 and the second distribution pipe 152 are connected to the vicinity of the bottom of the hydrogen fuel tank 2, and the downstream ends thereof are connected to the upstream ends of the main distribution pipe 153. The downstream end of the main distribution pipe 153 is connected to the engines 14. The liquid hydrogen LH stored in the hydrogen fuel tank 2 is taken out by the first distribution pipe 151 and/or the second distribution pipe 152, and is distributed to the engines 14 through the main distribution pipe 153.

As the booster pump 16, a first pump 161 is incorporated in the first distribution pipe 151, and a second pump 162 is incorporated in the second distribution pipe 152. That is, two paths through which the liquid hydrogen LH can be distributed to the engines 14 are provided in parallel. By achieving redundancy in this manner, for example, even in a case where either the first pump 161 or the second pump 162 cannot be used due to a failure or the like, fuel distribution paths to the engines 14 can be secured. Note that three or more fuel distribution paths may be provided to achieve further redundancy. As the booster pump 16, for example, electrically operated pumps each including a motor, mechanical pumps using axial power of the engines 14, or the like can be used. In addition to the motor, the electrically operated pump includes fluid components such as an inducer, an impeller, and a diffuser. The mechanical pump likewise includes fluidic components.

The tank pressurizing mechanism 3 raises the internal pressure of the hydrogen fuel tank 2. The tank pressurizing mechanism 3 includes return piping 31, a first regulating valve 34, an electric heater 35, that is, a fuel vaporizer, a second regulating valve 36, a controller 37, and the above-described pressure sensor 3P.

The return piping 31 forms a path that branches from the main distribution pipe 153 positioned downstream of the disposing positions of the booster pumps 16 in the distribution line 15 and returns to the hydrogen fuel tank 2. The return piping 31 branches into first return piping 32 and second return piping 33 on the downstream side in the direction where the liquid hydrogen LH returns to the hydrogen fuel tank 2. The downstream ends of the first return piping 32 and the second return piping 33 are connected to the storage space 20 of the hydrogen fuel tank 2. In the first return piping 32, the liquid hydrogen LH discharged to the distribution line 15 is vaporized and is returned to the hydrogen fuel tank 2. In the second return piping 33, the liquid hydrogen LH discharged to the distribution line 15 is returned, in a liquid phase, to the hydrogen fuel tank 2. From the viewpoint of redundancy, the fuel distribution system FS may include a plurality of paths branching from the distribution line 15 and returning to the hydrogen fuel tank 2. In this case, for example, a certain path may be branched from the first distribution pipe 151, and another path may be branched from the second distribution pipe 152. From the viewpoint of redundancy likewise, the fuel distribution system FS may include a plurality of devices corresponding to the first regulating valve 34, the electric heater 35, the second regulating valve 36, the pressure sensor 3P, and the like.

The first return piping 32 partially or entirely returns the liquid hydrogen LH, which has been extracted from the hydrogen fuel tank 2 in excess amount with respect to the required amount for the engines 14, to the hydrogen fuel tank 2. The excessive liquid hydrogen LH is vaporized when passing through the first return piping 32. The fuel distribution system FS vaporizes the liquid hydrogen LH and returns the liquid hydrogen LH to the hydrogen fuel tank 2, thereby raising the tank internal pressure decreased due to the fuel distribution. The first regulating valve 34 and the electric heater 35 are disposed in the first return piping 32. The electric heater 35 is disposed downstream of the first regulating valve 34 in a direction where the liquid hydrogen LH returns to the hydrogen fuel tank 2.

The first regulating valve 34 regulates the flow rate of the liquid hydrogen LH flowing through the first return piping 32. In other words, the first regulating valve 34 regulates the amount of a vaporized gas of the liquid hydrogen LH to be returned to the hydrogen fuel tank 2. The first regulating valve 34 is an electrically operated valve capable of regulating the opening degree. The controller 37 controls the opening degree of the first regulating valve 34. The first regulating valve 34 may be a mechanical flow rate regulating valve. Alternatively, the first regulating valve 34 may be an electrical or mechanical pressure regulating valve.

The electric heater 35 heats the liquid hydrogen LH flowing through the first return piping 32 to vaporize the liquid hydrogen LH. That is, the electric heater 35 is a fuel vaporizer. The controller 37 that adjusts the amount of the liquid hydrogen LH to be vaporized controls the output from the electric heater 35. For example, it is possible to adopt a method for adjusting the output depending on which heater element is turned on using the electric heater 35 discretely including a plurality of heater elements. When the liquid hydrogen LH whose flow rate has been regulated by the first regulating valve 34 returns to the hydrogen fuel tank 2 through the first return piping 32, the liquid hydrogen LH is heated to be vaporized by the electric heater 35. The vaporized gas, that is, the hydrogen gas is returned to the vapor phase portion GH of the hydrogen fuel tank 2. As a result, the amount of gas in the vapor phase portion GH increases, and the internal pressure of the hydrogen fuel tank 2 rises.

Instead of the electric heater 35, a heat exchanger may be used as the fuel vaporizer. The heat exchanger is a device that vaporizes the liquid hydrogen LH by exchanging heat between a heat medium and the liquid hydrogen LH. The hydrogen aircraft 1 has a fluid that can be used as a heat medium. The heat medium of the heat exchanger is, for example, bleed air that is compressed air extracted from a compression unit of the engine 14, exhaust heat energy that can be recovered from various places of the hydrogen aircraft 1, and the like.

Similarly to the first return piping 32, the second return piping 33 partially or entirely returns the liquid hydrogen LH, which has been excessively extracted from the hydrogen fuel tank 2, to the hydrogen fuel tank 2. However, unlike the first return piping 32, the second return piping 33 returns excessive liquid hydrogen LH in the liquid phase to the hydrogen fuel tank 2. In a case where the internal pressure of the hydrogen fuel tank 2 does not drop, the excessive liquid hydrogen LH does not have to be vaporized. The liquid hydrogen LH in the liquid phase is returned to the hydrogen fuel tank 2 through the second return piping 33, and thus the excessive liquid hydrogen LH is used as fuel. When the excessive liquid hydrogen LH is partially vaporized and returned to the hydrogen fuel tank 2, the internal pressure of the hydrogen fuel tank 2 may reach a target pressure. In this case, the remaining part of the excessive liquid hydrogen LH in the liquid phase is returned to the hydrogen fuel tank 2 through the second return piping 33.

The second regulating valve 36 is disposed in the second return piping 33. The second regulating valve 36 regulates the flow rate of the liquid hydrogen LH flowing through the second return piping 33. In other words, the second regulating valve 36 regulates the amount of the liquid hydrogen LH to be returned in the liquid phase to the hydrogen fuel tank 2. The second regulating valve 36 is a mechanical pressure regulating valve, and is opened or closed by the line pressure of the distribution line 15 downstream of the booster pumps 16. Specifically, the second regulating valve 36 is opened when the line pressure is higher than or equal to a predetermined pressure, and is closed when the line pressure is lower than a predetermined pressure. As the second regulating valve 36, an electrically operated flow rate regulating valve or pressure regulating valve controlled by the controller 37 may be used.

As described above, in the present embodiment, the return piping 31 for returning the excessive liquid hydrogen LH to the hydrogen fuel tank 2 is divided into the first return piping 32 for returning the liquid hydrogen LH in a gas phase and the second return piping 33 for returning the liquid hydrogen LH in a liquid phase. The separation into two systems makes it possible to accurately recover the internal pressure to a desired pressure when the tank internal pressure drops. When the return piping is a single system and the excessive liquid hydrogen LH is partially attempted to be vaporized, the flow of the liquid hydrogen LH might be a two-phase flow in which hydrogen in the gas phase and hydrogen in the liquid phase are mixed. When the two-phase flow is generated, pulsation or the like occurs in the return piping, and the flow rate of the liquid hydrogen LH is occasionally difficult to control. That is, control of the tank internal pressure is difficult. On the other hand, in the present embodiment, a system that returns the liquid hydrogen LH in a gas phase and a system that returns the liquid hydrogen LH in a liquid phase are disposed, and the liquid hydrogen LH is entirely vaporized and returned in the first return piping 32. Thus, generation of a two-phase flow can be reduced.

The tank depressurizing mechanism 4 decreases the internal pressure of the hydrogen fuel tank 2. The tank depressurizing mechanism 4 includes a vent line 41, an internal pressure regulating valve 42, a relief valve 43, a frame arrester 44, a check valve 45, and a vent heater 46.

The vent line 41 extends from the upper portion of the hydrogen fuel tank 2 to the outside, and allows the vapor phase portion GH in the storage space 20 to communicate with outside air. When the internal pressure of the hydrogen fuel tank 2 becomes higher than a predetermined pressure, the vent line 41 detoxifies a hydrogen gas in the vapor phase portion GH and releases the hydrogen gas to the outside air. The vent line 41 includes a first vent pipe 411 and a second vent pipe 412 disposed in parallel on an upstream side in a hydrogen gas release direction, and includes a single main vent pipe 413 on a downstream side.

The upstream ends of the first vent pipe 411 and the second vent pipe 412 are opened to the storage space 20. The downstream ends of the first vent pipe 411 and the second vent pipe 412 are connected to an upstream end of the main vent pipe 413. The upstream ends of the first vent pipe 411 and the second vent pipe 412 include a mechanism that maintains the open state of the storage space 20 to the vapor phase portion GH even when the attitude of the hydrogen aircraft 1 changes. In this mechanism, for example, the upstream ends of the first vent pipe 411 and the second vent pipe 412 are branched into a plurality of parts, and the branch destinations are opened at different positions above the storage space 20. A float valve is disposed at the branch destinations of the upstream ends of the first vent pipe 411 and the second vent pipe 412. The float valve is closed when the liquid hydrogen LH in the liquid phase attempts to pass through the upstream end. The downstream end of the main vent pipe 413 is open to the atmosphere. An internal pressure regulating valve 42 is disposed in the first vent pipe 411. A relief valve 43 is disposed in the second vent pipe 412.

The internal pressure regulating valve 42 is opened when the internal pressure of the hydrogen fuel tank 2 becomes higher than a set value. The internal pressure regulating valve 42 may be a mechanical type that is mechanically opened when the tank internal pressure becomes higher than or equal to a set value, or may be an electrically operated type that is opened and closed under the control by the controller 37. In response to the opening of the internal pressure regulating valve 42, the hydrogen gas in the vapor phase portion GH is released to the atmosphere through the first vent pipe 411 and the main vent pipe 413. As a result, the tank internal pressure is maintained at the set value or less.

The relief valve 43 is a valve that is opened when the internal pressure of the hydrogen fuel tank 2 is higher than a predetermined value. The relief valve 43 may be a mechanical type or an electrically operated type. For example, in a case where the tank internal pressure sharply rises due to a failure of the internal pressure regulating valve 42 or the like and reaches a design abnormal value, the relief valve 43 is opened. In response to the opening of the relief valve 43, the hydrogen gas in the vapor phase portion GH is released to the atmosphere through the second vent pipe 412 and the main vent pipe 413, and the tank internal pressure drops.

The frame arrester 44, the check valve 45, and the vent heater 46 are assembled to the main vent pipe 413. The frame arrester 44 prevents a flame from spreading upstream of the vent line 41. The check valve 45 is disposed on the downstream side of the frame arrester 44 in the hydrogen gas release direction of the main vent pipe 413. The check valve 45 restricts the flow of the gas flowing through the vent line 41 in one direction. The check valve 45 allows release of hydrogen gas from the hydrogen fuel tank 2 to the atmosphere through the vent line 41. On the other hand, the check valve 45 prohibits a gas flow from the atmosphere toward the hydrogen fuel tank 2. The vent heater 46 is disposed downstream of the check valve 45 and heats the hydrogen gas discharged through the vent line 41. As a result, the hydrogen gas in a cryogenic state is prevented from being discharged to the atmosphere.

The controller 37 generally controls the respective units of the fuel distribution system FS. The controller 37 includes a processor and a memory. The controller 37 controls the operation of the electrical equipment included in the fuel distribution system FS by executing a predetermined program stored in the memory. In the present embodiment, the controller 37 acquires an electric signal related to a measurement value of the internal pressure of the hydrogen fuel tank 2 from the pressure sensor 3P, and monitors the internal pressure. The controller 37 controls at least the opening degree of the first regulating valve 34 and the output from the electric heater 35 depending on the internal pressure.

Specifically, when the internal pressure drops below a predetermined threshold, the controller 37 sets the first regulating valve 34 to a predetermined opening degree, and operates the electric heater 35 to vaporize the liquid hydrogen LH passing through the first regulating valve 34 and to distribute the liquid hydrogen LH to the hydrogen fuel tank 2. The liquid hydrogen LH to be vaporized at this time is excessive liquid hydrogen LH, which has been extracted from the hydrogen fuel tank 2 in excess amount with respect to the required fuel distribution amount for the engines 14 and been distributed to the distribution line 15. Under this control, the controller 37 raises the internal pressure of the hydrogen fuel tank 2. The control is continued until the internal pressure exceeds a predetermined threshold. In a case where the second regulating valve 36 is an electrically operated valve, such a valve may also be controlled by the controller 37. The tank depressurizing mechanism 4 may also be controlled by the controller 37. For example, in a case where the internal pressure becomes higher than a predetermined pressure, the controller 37 may decrease the internal pressure of the hydrogen fuel tank 2 with the internal pressure regulating valve 42 being set to a predetermined opening degree.

### [Specific example of tank pressurization control]

A specific example of the tank pressurization control performed by the controller 37 will be described below. The tank pressurization control is control for pressurizing the storage space 20 to restore the internal pressure to a predetermined threshold when the internal pressure of the hydrogen fuel tank 2 drops below the threshold.

### <First embodiment>

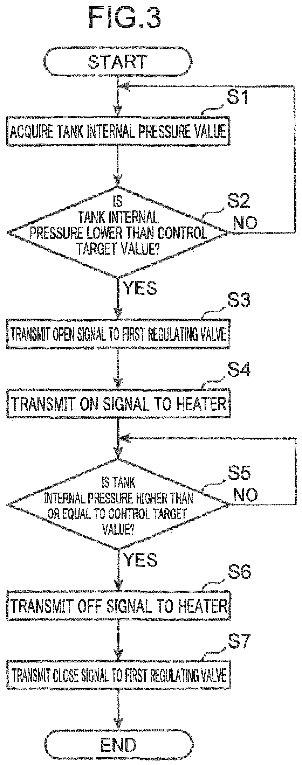

FIG. 3 is a flowchart illustrating the tank pressurization control according to the first embodiment. The controller 37 acquires a measurement value of the internal pressure of the hydrogen fuel tank 2 from the pressure sensor 3P at a predetermined sampling cycle (step S1). In a case where the internal pressure of the hydrogen fuel tank 2 falls within a predetermined threshold range, the first regulating valve 34 is closed, and the second regulating valve 36 is mechanically opened and closed depending on the line pressure of the distribution line 15. The controller 37 determines whether the acquired tank internal pressure value is smaller than a control target value, that is, whether the tank internal pressure drops below a predetermined threshold (step S2). In a case where the tank internal pressure falls within the range of the control target value (NO in step S2), the controller 37 returns to step S1 and continues monitoring of the tank internal pressure.

On the other hand, in a case where the tank internal pressure is lower than the control target value (YES in step S2), the controller 37 transmits an opening signal for opening the first regulating valve 34 at an opening degree depending on a drop of the tank internal pressure (step S3). Further, the controller 37 transmits an ON signal to the electric heater 35 to heat the liquid hydrogen LH which passes through the first regulating valve 34 and flows through the first return piping 32 (step S4). This operation introduces the hydrogen gas obtained by vaporizing the liquid hydrogen LH into the hydrogen fuel tank 2, and the tank internal pressure rises. Note that the reason why the opening of the first regulating valve 34 precedes the turning ON of the electric heater 35 is to prevent the electric heater 35 from heating the first return piping 32 in a state where liquid hydrogen does not exist.

Subsequently, the controller 37 determines whether the tank internal pressure value is larger than or equal to the control target value with reference to the measurement value of the pressure sensor 3P (step S5). In a case where the tank internal pressure value does not reach the control target value or more (NO in step S5), the operation for introducing the hydrogen gas for pressurization into the hydrogen fuel tank 2 is continued. On the other hand, in a case where the tank internal pressure reaches the control target value or more (YES in step S5), the controller 37 stops the tank pressurization control. Specifically, the controller 37 transmits an OFF signal to the electric heater 35 (step S6). The controller 37 further transmits an opening signal for closing the first regulating valve 34 (step S7).

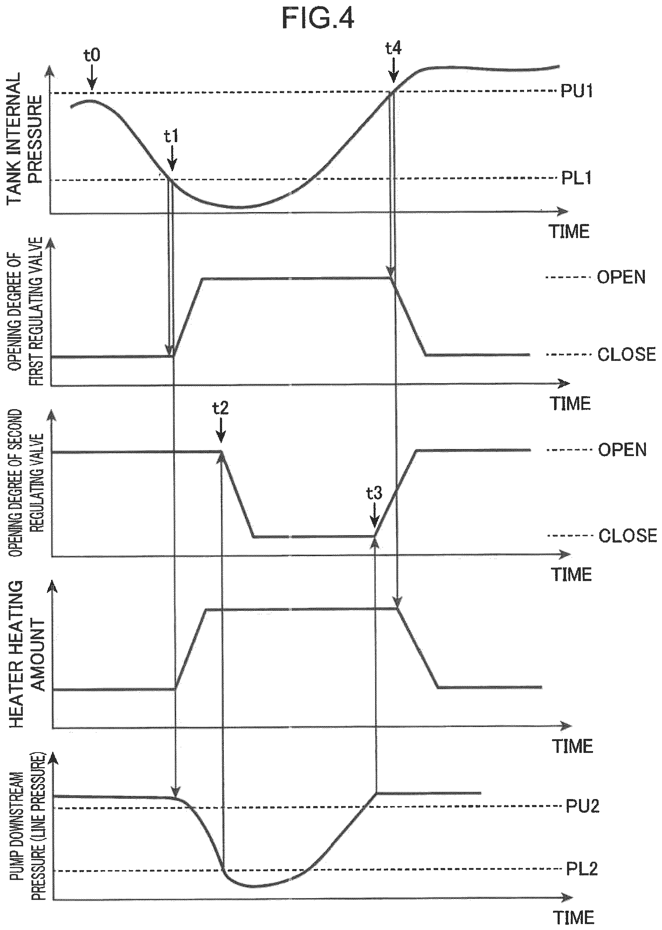

FIG. 4 is a time chart illustrating an operation of each unit of the fuel distribution system FS in a case where the tank pressurization control according to the first embodiment is performed. The uppermost column of the chart shows the internal pressure of the hydrogen fuel tank 2, the second column shows the opening degree of the electrically operated first regulating valve 34, the third column shows the opening degree of the mechanical second regulating valve 36, the fourth column shows the heating amount of the electric heater 35, and the lowermost column shows the pressure of the distribution line 15 downstream of the booster pumps 16. Hereinafter, the pressure of the distribution line 15 downstream of the booster pumps 16 is described as a line pressure. A control lower limit value PL1 shown in FIG. 4 is a value set as a pressure for starting the control for raising the tank internal pressure of the hydrogen fuel tank 2, and a control upper limit value PU1 is a value set as a pressure for stopping the control for raising the tank internal pressure. A closing operation pressure value PL2 is a value set as a target value for suppressing a drop of the line pressure, and an opening operation pressure value PU2 is a value set as a target value for suppressing a rise in the line pressure.

At time t0, the tank internal pressure is within a prescribed range between the control upper limit value PU1 and the control lower limit value PL1. At this time t0, the controller 37 fully closes the first regulating valve 34 and turns off the electric heater 35. In a case where excessive liquid hydrogen LH that is not consumed by the engines 14 is delivered from the hydrogen fuel tank 2 to the distribution line 15 in addition to the amount of fuel required by the engines 14, the line pressure rises. The mechanical second regulating valve 36 is opened when the line pressure exceeds the opening operation pressure value PU2, and prevents a rise in the line pressure. That is, this operation keeps the line pressure constant. FIG. 4 illustrates a state where the line pressure exceeds the opening operation pressure PU2 at time t0. Therefore, the second regulating valve 36 is in an open state. The liquid hydrogen LH in the liquid phase is returned to the hydrogen fuel tank 2 through the second return piping 33.

Time t1 is a time at which the tank internal pressure becomes lower than the control lower limit value PL1 due to the fuel distribution to the engines 14. At time t1, the controller 37 opens the first regulating valve 34 and then turns on the electric heater 35. As a result, the vaporized gas of the liquid hydrogen LH starts to be introduced into the hydrogen fuel tank 2 through the first return piping 32. As both the first regulating valve 34 and the second regulating valve 36 are opened and the flow rate of the liquid hydrogen LH flowing through the distribution line 15 increases, the line pressure gradually drops.

When the line pressure drops below the closing operation pressure value PL2, the second regulating valve 36 is closed. The time at which the second regulating valve 36 is closed is time t2. After time t2, the introduction of the vaporized gas of the liquid hydrogen LH continues, and thus the tank internal pressure gradually rises. Further, when the second regulating valve 36 is closed, the line pressure also gradually rises. When the line pressure eventually exceeds the closing operation pressure value PU2, the second regulating valve 36 is opened. The time at which the second regulating valve 36 is closed is time t3.

The time at which the tank internal pressure exceeds the control upper limit value PU1 is time t4. At time t4, the controller 37 turns off the electric heater 35, closes the first regulating valve 34, and stops the tank pressurization control. The tank internal pressure after time t4 is substantially equal to the tank internal pressure at time t0. The first regulating valve 34 may be slightly opened, the electric heater 35 may be turned on with a small output, and a small amount of the vaporized gas of the liquid hydrogen LH may be continuously distributed to the hydrogen fuel tank 2.

In a case where the tank internal pressure sharply rises, the tank depressurizing mechanism 4 operates to drop the tank internal pressure. In a case where the controller 37 controls the internal pressure regulating valve 42, the controller 37 opens the internal pressure regulating valve 42 at a predetermined opening degree when the pressure sensor 3P detects a rise in the tank internal pressure higher than or equal to a specified value. As a result, the hydrogen gas in the vapor phase portion GH in the hydrogen fuel tank 2 is discharged to the atmosphere. As a result, the tank internal pressure drops. Even if a failure that the internal pressure regulating valve 42 does not operate occurs, the tank internal pressure is reduced by opening the relief valve 43.

### <Second embodiment>

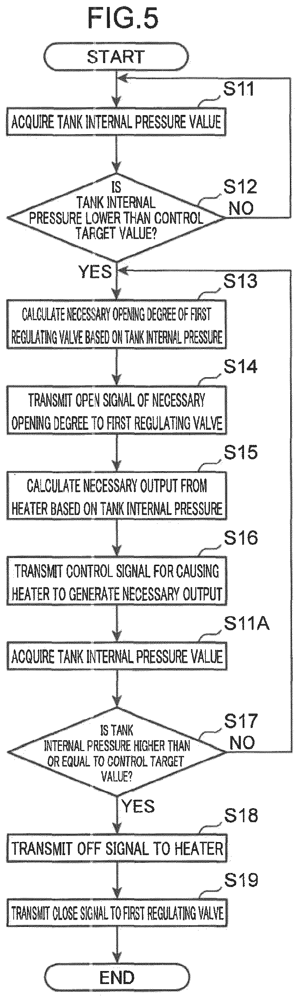

FIG. 5 is a flowchart showing tank pressurization control according to a second embodiment. In the second embodiment, the opening degree of a first regulating valve 34 and the output from an electric heater 35 are set depending on a tank internal pressure. As in the first embodiment, a controller 37 acquires a measurement value of the internal pressure in a hydrogen fuel tank 2 from a pressure sensor 3P (step S11). The controller 37 then determines whether the acquired tank internal pressure value is smaller than a control target value (step S12). In a case where the tank internal pressure falls within the range of the control target value (NO in step S12), monitoring of the tank internal pressure is continued.

On the other hand, in a case where the tank internal pressure is lower than the control target value (YES in step S12), the controller 37 obtains a difference between a preset target pressure of the tank internal pressure and a current tank internal pressure actually measured by the pressure sensor 3P. The controller 37 calculates the required opening degree of the first regulating valve 34 based on the difference (step S13). The required opening degree of the first regulating valve 34 is an opening degree at which a passage amount of the liquid hydrogen LH necessary for raising the tank internal pressure by a pressure corresponding to the difference within a predetermined time can be secured. The larger the difference, the higher the required opening degree. The controller 37 calculates the passage amount of the liquid hydrogen LH in the first regulating valve 34, the passage amount being necessary to cause the tank internal pressure to fall within the range of the control target value, based on the amount of vaporized gas necessary to restore the tank internal pressure. Subsequently, the controller 37 transmits an opening signal to the first regulating valve 34 to open the first regulating valve 34 at the calculated necessary opening degree (step S14).

Next, the controller 37 calculates a necessary output from the electric heater 35 based on the tank internal pressure (step S15). That is, the controller 37 calculates the output from the electric heater 35 that generates the amount of heat capable of vaporizing the entire amount of the liquid hydrogen LH flowing through the first return piping 32 at the opening degree of the first regulating valve 34 obtained in step S13. The controller 37 transmits a control signal for generating the calculated necessary output to the electric heater 35 (step S16). With such a mode, the liquid hydrogen LH can be vaporized by the electric heater 35 with an optimum power consumption, depending on currently required pressurization demand in the hydrogen fuel tank 2.

Subsequently, the controller 37 acquires the measurement value of the pressure sensor 3P (step S11A) and acquires the current tank internal pressure. The controller 37 determines whether the tank internal pressure value is larger than or equal to the control target value, based on the measurement value in step S11A (step S17). In a case where the tank internal pressure value does not reach the control target value or more (NO in step S17), the operation for introducing the hydrogen gas for pressurization into the hydrogen fuel tank 2 is continued. That is, the processing returns to step S13 and the processing is repeated.

On the contrary, in a case where the tank internal pressure reaches the control target value or more (YES in step S17), the controller 37 stops the tank pressurization control. The controller 37 transmits an OFF signal to the electric heater 35 (step S18). The controller 37 further transmits a closing signal for closing the first regulating valve 34 (step S19).

### <Third embodiment>

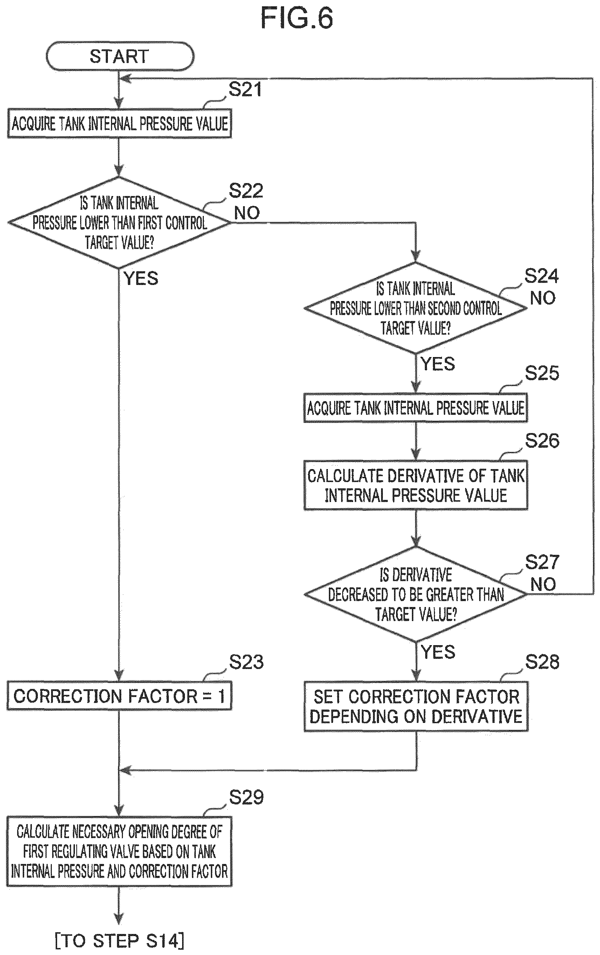

FIG. 6 is a flowchart showing tank pressurization control according to a third embodiment. In the third embodiment, the tank pressurization control is performed in consideration of a derivative of the tank internal pressure in addition to the tank internal pressure. Even in a case where the tank internal pressure does not actually drop below a control lower limit value PL1 (see FIG. 4), the internal pressure drop rate might be large and the tank internal pressure might be expected to drop below the control lower limit value PL1 in a short time. The third embodiment can appropriately cope with the above case.

A controller 37 acquires a measurement value of the internal pressure of a hydrogen fuel tank 2 from a pressure sensor 3P (step S21). The controller 37 then determines whether the acquired tank internal pressure value is smaller than a first control target value (step S22). The first control target value is a value set for a situation where the tank pressurization control has to be immediately performed due to a drop of the tank internal pressure. The first control target value is a value corresponding to the control lower limit value PL1 of the tank internal pressure in FIG. 4. In a case where the tank internal pressure is lower than the control target value (YES in step S22), the controller 37 sets the correction factor to 1 (step S23). The correction factor is a factor used to calculate the required opening degree of the first regulating valve 34.

In a case where the tank internal pressure is higher than or equal to the first control target value (NO in step S 22), the controller 37 determines whether the tank internal pressure value acquired in step S21 is smaller than a second control target value (step S24). The second control target value is a value larger than the first control target value used in step S22. In other words, the second control target value is a value larger by a predetermined value than the tank internal pressure value in a situation where the tank pressurization control has to be immediately performed. However, in a case where the tank internal pressure is lower than the second control target value, the tank internal pressure is likely to drop below the first control target value in a short time when the tank internal pressure sharply drops. In a vase where the tank internal pressure does not drop to a smaller value than the second control target value (NO in step S24), the processing returns to step S21 and the monitoring of the tank internal pressure is continued.

On the other hand, when the tank internal pressure is lower than the second control target value (YES in step S24), the controller 37 acquires a current tank internal pressure value from the pressure sensor 3P (step S25). Subsequently, the controller 37 calculates a change rate of the tank internal pressure value, that is, a derivative based on the tank internal pressure value acquired in step S21 and the tank internal pressure value acquired in step S25 (step S26). After calculating the derivative, the controller 37 determines whether the derivative indicates a degree of a decrease larger than a predetermined threshold (step S27). Hereinafter, the predetermined threshold of the derivative indicating the degree of decrease is a target value of the derivative.

In a case where the derivative is the degree of decrease smaller than the target value (NO in step S27), the processing returns to step S21 and the monitoring of the tank internal pressure is continued. In this situation, the tank internal pressure is comparatively low within the prescribed value range, but the degree of decrease in the tank internal pressure is comparatively small. Therefore, in this situation, the tank internal pressure does not immediately drop below the first control target value. On the other hand, in a case where the derivative is the degree of decrease larger than the target value (YES in step S27), the controller 37 sets a correction factor depending on the derivative (step S28). For example, the controller 37 sets the correction factor with reference to a predetermined table.

Basically, the correction factor is a factor that increases the required opening degree of the first regulating valve 34 as the derivative is larger. However, the correction factor may be optionally set. When the correction factor is 1, the first regulating valve 34 is opened at a preset standard opening degree. On the contrary, for example, in a case where the derivative is particularly large and the tank internal pressure is expected to drop below an allowable range in a short time, the controller 37 sets the correction factor to 1 or more. As a result, the controller 37 opens the first regulating valve 34 at an opening degree larger than the standard opening degree. On the other hand, in a case where the derivative is large but a certain time margin is left until the tank internal pressure drops below the allowable range, the controller 37 sets the correction factor to less than 1. As a result, the controller 37 opens the first regulating valve 34 at an opening degree smaller than the standard opening degree.

Subsequently, the controller 37 calculates the necessary opening degree of the first regulating valve 34 with reference to the tank internal pressure value and the correction factors set in steps S23 and S28 (step S29). Since the following processing is substantially the same as the processing in and after step S14 in FIG. 5, the description thereof is omitted here. According to the third embodiment, since the derivative of the internal pressure of the hydrogen fuel tank 2 is monitored, a sharp drop of the tank internal pressure can be acquired. Even in a case where the tank internal pressure does not drop below the predetermined threshold, the internal pressure of the hydrogen fuel tank 2 is raised when an internal pressure drop rate is large and the internal pressure is expected to drop below the prescribed value, that is, the control lower limit value PL1 in a short time. Therefore, a drop of the tank internal pressure that hinders the stable distribution of liquid hydrogen from the booster pumps 16 can be prevented.

The functions of the elements disclosed in this specification can be implemented using a circuit or a processing circuit including a general-purpose processor, a special-purpose processor, an integrated circuit, an application specific integrated circuit (ASIC), conventional circuitry, and/or combinations thereof configured to or programmed to implement the disclosed functions. A processor is considered a processing circuit or a circuit because it includes transistors and other circuits. In the present disclosure, the circuit, unit, or means is hardware that implements the recited functions or is hardware programmed to implement the recited functions. The hardware may be the hardware disclosed in this specification or may be other known hardware that is programmed or configured to implement the recited functions. When the hardware is a processor considered as a type of circuit, the circuit, means, or unit is a combination of hardware and software, and the software is used for a configuration of hardware and/or a processor.

### [Summary of the present disclosure]

The specific embodiments described above include the disclosure having the following configurations.

A fuel distribution system of a hydrogen aircraft from a first aspect of the present disclosure includes a hydrogen fuel tank storing liquid hydrogen, a pressure sensor that measures an internal pressure of the hydrogen fuel tank, fuel distribution piping through which liquid hydrogen is delivered from the hydrogen fuel tank to a predetermined distribution destination, a pump that is disposed in the fuel distribution piping and delivers liquid hydrogen, first return piping including a path, a first regulating valve, and a fuel vaporizer, the path branching from the fuel distribution piping downstream of a disposing position of the pump and returning to the hydrogen fuel tank, the first regulating valve regulating a flow rate or pressure of liquid hydrogen, the fuel vaporizer vaporizing liquid hydrogen, and a controller that acquires a measurement value of the internal pressure of the fuel tank from the pressure sensor and controls the first regulating valve and the fuel vaporizer.

According to the first aspect, liquid hydrogen discharged from the hydrogen fuel tank to the fuel distribution piping can be vaporized through the first return piping and returned to the hydrogen fuel tank. Further, the return amount of the vaporized liquid hydrogen can be regulated by controlling the first regulating valve based on the measurement value of the pressure sensor. Therefore, the internal pressure of the hydrogen fuel tank can be kept constant, and liquid hydrogen can be stably distributed from the pump. Further, in a hydrogen aircraft, liquid hydrogen in an amount larger than the demand of a propulsion system may be discharged from the hydrogen fuel tank so that the propulsion system does not run out of fuel by any chance. In this case, excessive liquid hydrogen needs to be treated. According to the first aspect, the internal pressure of the hydrogen fuel tank can be stabilized while excessive liquid hydrogen is also treated.

According to a second aspect, the fuel distribution system of the first aspect further includes second return piping including a path branching from the fuel distribution piping downstream of the disposing position of the pump and returning to the hydrogen fuel tank, and a second regulating valve that regulates a flow rate or pressure of liquid hydrogen.

According to the second aspect, the liquid hydrogen discharged from the hydrogen fuel tank can be, in a liquid phase, returned to the hydrogen fuel tank through the second return piping. For example, a path is secured for returning, some amount of liquid hydrogen, which is not used for regulating the internal pressure of the hydrogen fuel tank, that is, does not have to be vaporized in the excessively distributed liquid hydrogen, in the liquid phase to the hydrogen fuel tank.

According to a third aspect, in the fuel distribution system from the first or second aspect, the controller acquires a measurement value of the pressure sensor, sets the first regulating valve to a predetermined opening degree when the internal pressure drops below a predetermined threshold, and operates the fuel vaporizer to vaporize liquid hydrogen passing through the first regulating valve.

According to the third aspect, when the internal pressure of the hydrogen fuel tank drops below a predetermined threshold, liquid hydrogen vaporized in a timely manner can be introduced into the hydrogen fuel tank to raise the internal pressure.

According to a fourth aspect, in the fuel distribution system from the first or second aspect, the controller acquires a measurement value of the pressure sensor, calculates a derivative of the internal pressure based on the measurement value acquired from the pressure sensor, and when the derivative indicates a degree of decrease larger than a predetermined threshold, sets the first regulating valve to an opening degree depending on the derivative and operates the fuel vaporizer to vaporize liquid hydrogen passing through the first regulating valve.

According to the fourth aspect, when the derivative of the internal pressure of the hydrogen fuel tank indicates a degree of reduction larger than the predetermined threshold, liquid hydrogen vaporized in a timely manner can be introduced into the hydrogen fuel tank to raise the internal pressure. In particular, monitoring the derivative makes it possible to acquire a sharp drop of the internal pressure of the hydrogen fuel tank and to regulate the tank internal pressure depending on the sharp drop.

According to a fifth aspect, in the fuel distribution system from the second to fourth aspects, the second regulating valve is opened when line pressure of the fuel distribution piping downstream of the disposing position of the pump is higher than or equal to a predetermined pressure, and is closed when the line pressure is lower than the predetermined pressure.

According to the fifth aspect, since the second regulating valve is opened or closed depending on the line pressure of the fuel distribution piping, a control system that directly controls the second regulating valve can be omitted.

According to a sixth aspect, the fuel distribution system from first to third aspects further includes second return piping including a path and a second regulating valve, the path branching from the fuel distribution piping downstream of the disposing position of the pump and returning to the hydrogen fuel tank, the second regulating valve regulating a flow rate of liquid hydrogen. The second regulating valve is opened when line pressure of the fuel distribution piping downstream of the disposing position of the pump is higher than or equal to a predetermined pressure and is closed when the line pressure is lower than the predetermined pressure. The controller closes the second regulating valve by performing opening control of the first regulating valve to decrease the line pressure, and opens the second regulating valve by performing closing control of the first regulating valve to raise the line pressure when the internal pressure recovers to exceed the predetermined threshold.

According to the sixth aspect, the first return piping and the second return piping can be selectively controlled while a mechanical valve is used as the second regulating valve. In the first return piping, liquid hydrogen is vaporized and is returned to the hydrogen fuel tank. In the second return piping, the liquid hydrogen in the liquid phase is returned to the hydrogen fuel tank. That is, it is possible to automate the operation for returning the vaporized liquid hydrogen from the first return piping when the internal pressure of the hydrogen fuel tank drops and for returning the liquid hydrogen in the liquid phase from the second return piping to the hydrogen fuel tank when the internal pressure recovers.

According to a seventh aspect, in the fuel distribution system from the first to sixth aspects, the fuel vaporizer includes an electric heater. According to the seventh aspect, the fuel vaporizer can be downsized, and electric control of the fuel vaporizer can be easily performed.

According to an eighth aspect, in the fuel distribution system from the seventh aspect, the control unit controls an output from the electric heater based on a difference between a preset target pressure of the internal pressure and a current internal pressure of the hydrogen fuel tank, the current internal pressure being measured by the pressure sensor.

According to the eighth aspect, liquid hydrogen can be vaporized by the electric heater in accordance with the pressurization demand of the hydrogen fuel tank currently required.

According to a ninth aspect, in the fuel distribution system from the first to sixth aspects, the fuel vaporizer includes a heat exchanger. According to the eighth aspect, bleed air and exhaust heat energy of a hydrogen aircraft can be used as a heat medium of a fuel vaporizer.

According to a tenth aspect, the fuel distribution system from the first to ninth aspects further includes a depressurizing mechanism capable of depressurizing the internal pressure of the hydrogen fuel tank.

According to the tenth aspect, in a case where the internal pressure of the hydrogen fuel tank rises due to any factor, the depressurizing mechanism can return the internal pressure to a normal state.

A hydrogen aircraft from an eleventh aspect of the present disclosure includes an airframe including a fuselage and wings, at least one propulsion system fixed to the airframe, and the fuel distribution system from any one of the first to tenth aspects, the fuel distribution system distributing liquid hydrogen to the propulsion system.

According to the eleventh aspect, a hydrogen aircraft capable of keeping the internal pressure of the hydrogen fuel tank constant and stably distributing liquid hydrogen from the pump can be provided. Further, the internal pressure of the hydrogen fuel tank can be stabilized while the excessive liquid hydrogen discharged from the hydrogen fuel tank is also treated.

## Claims

1. A fuel distribution system for an aircraft (1), comprising:
a fuel tank (2) storing liquid fuel;
a pressure sensor (3P) that measures an internal pressure of the fuel tank;
fuel distribution piping (15) through which liquid fuel is delivered from the fuel tank to a predetermined distribution destination;
a pump (16) that is disposed in the fuel distribution piping and delivers liquid fuel;
first return piping including a path (32), a first regulating valve (34), and a fuel vaporizer (35), the path branching from the fuel distribution piping downstream of a disposing position of the pump and returning to the fuel tank, the first regulating valve regulating a flow rate or pressure of liquid fuel, the fuel vaporizer vaporizing liquid fuel; and
a controller (37) that acquires a measurement value of the internal pressure of the fuel tank from the pressure sensor and controls the first regulating valve,
**characterized in that**
the controller (37) also controls the fuel vaporizer (35), and
the fuel is hydrogen.

2. The fuel distribution system according to claim 1, further comprising second return piping including a path (33) branching from the fuel distribution piping (15) downstream of the disposing position of the pump (16) and returning to the fuel tank (2), and a second regulating valve (36) that regulates a flow rate or pressure of liquid fuel.

3. The fuel distribution system according to claim 1, wherein the controller (37) acquires a measurement value of the pressure sensor (3P), sets the first regulating valve (34) to a predetermined opening degree when the internal pressure drops below a predetermined threshold, and operates the fuel vaporizer (35) to vaporize liquid hydrogen passing through the first regulating valve.

4. The fuel distribution system according to claim 1, wherein the controller (37) acquires a measurement value of the pressure sensor (3P), calculates a derivative of the internal pressure based on the measurement value acquired from the pressure sensor, and when the derivative indicates a degree of decrease larger than a predetermined threshold, sets the first regulating valve (34) to an opening degree depending on the derivative and operates the fuel vaporizer (35) to vaporize liquid hydrogen passing through the first regulating valve.

5. The fuel distribution system according to claim 2, wherein the second regulating valve (36) is opened when line pressure of the fuel distribution piping (15) downstream of the disposing position of the pump (16) is higher than or equal to a predetermined pressure, and is closed when the line pressure is lower than the predetermined pressure.

6. The fuel distribution system according to claim 3, further comprising:
second return piping including a path (33) and a second regulating valve (36), the path branching from the fuel distribution piping (15) downstream of the disposing position of the pump (16) and returning to the fuel tank (2), the second regulating valve regulating a flow rate of liquid fuel,
wherein the second regulating valve is opened when line pressure of the fuel distribution piping downstream of the disposing position of the pump is higher than or equal to a predetermined pressure, and is closed when the line pressure is lower than the predetermined pressure, and
wherein the controller (37)
closes the second regulating valve by performing opening control of the first regulating valve (34) to decrease the line pressure, and
opens the second regulating valve by performing closing control of the first regulating valve to raise the line pressure when the internal pressure recovers to exceed the predetermined threshold.

7. The fuel distribution system according to claim 1, wherein the fuel vaporizer (35) includes an electric heater.

8. The fuel distribution system according to claim 7, wherein the controller (37) controls an output from the electric heater based on a difference between a preset target pressure of the internal pressure and a current internal pressure of the fuel tank (2), the current internal pressure being measured by the pressure sensor (3P).

9. The fuel distribution system according to claim 1, wherein the fuel vaporizer (35) includes a heat exchanger.

10. The fuel distribution system according to claim 1, further comprising a depressurizing mechanism (4) capable of depressurizing the internal pressure of the fuel tank (2).

11. An aircraft (1), comprising:
an airframe (10) including a fuselage (11) and wings (12);
at least one propulsion system (14) fixed to the airframe; and
the fuel distribution system according to any one of claims 1 to 10 that supplies liquid hydrogen to the propulsion system.

## Patentansprüche

1. Kraftstoffverteilungssystem für ein Luftfahrzeug (1), das Folgendes umfasst:
einen Kraftstofftank (2), in dem flüssiger Kraftstoff gelagert wird;
einen Drucksensor (3P), der einen internen Druck des Kraftstofftanks misst;
eine Kraftstoffverteilungsleitung (15), durch die flüssiger Kraftstoff vom Kraftstofftank zu einem vorbestimmten Verteilungsziel geliefert wird;
eine Pumpe (16), die in der Kraftstoffverteilungsleitung angeordnet ist und flüssigen Kraftstoff liefert;
eine erste Rücklaufleitung, die einen Pfad (32), ein erstes Regelventil (34) und einen Kraftstoffverdampfer (35) einschließt, wobei der Pfad von der Kraftstoffverteilungsleitung stromabwärts von einer Position, an der die Pumpe angeordnet ist, abzweigt und zum Kraftstofftank zurückkehrt, wobei das erste Regelventil eine Durchflussrate oder einen Druck des flüssigen Kraftstoffs regelt, wobei der Kraftstoffverdampfer den flüssigen Kraftstoff verdampft; und
eine Steuerung (37), die einen Messwert des internen Drucks des Kraftstofftanks von dem Drucksensor erhält und das erste Regelventil steuert,
**dadurch gekennzeichnet, dass**
die Steuerung (37) auch den Kraftstoffverdampfer (35) steuert, und
es sich bei dem Kraftstoff um Wasserstoff handelt.

2. Kraftstoffverteilungssystem nach Anspruch 1, das ferner eine zweite Rücklaufleitung umfasst, die einen Pfad (33) einschließt, der von der Kraftstoffverteilungsleitung (15) stromabwärts von der Position, an der die Pumpe (16) angeordnet ist, abzweigt und zum Kraftstofftank (2) zurückkehrt, sowie ein zweites Regelventil (36), das eine Durchflussmenge oder einen Druck von flüssigem Kraftstoff regelt.

3. Kraftstoffverteilungssystem nach Anspruch 1, wobei die Steuerung (37) einen Messwert des Drucksensors (3P) erhält, das erste Regelventil (34) auf einen vorbestimmten Öffnungsgrad einstellt, wenn der interne Druck unter einen vorbestimmten Schwellenwert fällt, und den Kraftstoffverdampfer (35) betreibt, um flüssigen Wasserstoff zu verdampfen, der durch das erste Regelventil hindurchgeht.

4. Kraftstoffverteilungssystem nach Anspruch 1, wobei die Steuerung (37) einen Messwert des Drucksensors (3P) erhält, basierend auf dem vom Drucksensor erhaltenen Messwert eine Ableitung des internen Drucks berechnet und, wenn die Ableitung einen Grad der Abnahme anzeigt, der größer als ein vorbestimmter Schwellenwert ist, das erste Regelventil (34) auf einen von der Ableitung abhängigen Öffnungsgrad einstellt und den Kraftstoffverdampfer (35) betreibt, um flüssigen Wasserstoff zu verdampfen, der durch das erste Regelventil hindurchgeht.

5. Kraftstoffverteilungssystem nach Anspruch 2, wobei das zweite Regelventil (36) geöffnet wird, wenn der Leitungsdruck der Kraftstoffverteilungsleitung (15) stromabwärts der Position, an der die Pumpe (16) angeordnet ist, höher oder gleich einem vorbestimmten Druck ist, und geschlossen wird, wenn der Leitungsdruck niedriger als der vorbestimmte Druck ist.

6. Kraftstoffverteilungssystem nach Anspruch 3, das ferner Folgendes umfasst:
eine zweite Rücklaufleitung, die einen Pfad (33) und ein zweites Regelventil (36) einschließt, wobei der Pfad von der Kraftstoffverteilungsleitung (15) stromabwärts von der Position, an der die Pumpe (16) angeordnet ist, abzweigt und zum Kraftstofftank (2) zurückkehrt, wobei das zweite Regelventil eine Durchflussrate von flüssigem Kraftstoff regelt,
wobei das zweite Regelventil geöffnet wird, wenn der Leitungsdruck der Kraftstoffverteilungsleitung stromabwärts der Position, an der die Pumpe angeordnet ist, höher oder gleich einem vorbestimmten Druck ist, und geschlossen wird, wenn der Leitungsdruck niedriger als der vorbestimmte Druck ist, und
wobei die Steuerung (37)
das zweite Regelventil schließt, indem sie eine Öffnungssteuerung des ersten Regelventils (34) durchführt, um den Leitungsdruck zu verringern, und
das zweite Regelventil öffnet, indem sie eine Schließsteuerung des ersten Regelventils durchführt, um den Leitungsdruck zu erhöhen, wenn der interne Druck wieder den vorbestimmten Schwellenwert übersteigt.

7. Kraftstoffverteilungssystem nach Anspruch 1, wobei der Kraftstoffverdampfer (35) ein elektrisches Heizelement einschließt.

8. Kraftstoffverteilungssystem nach Anspruch 7, wobei die Steuerung (37) eine Ausgabe des elektrischen Heizelements basierend auf einer Differenz zwischen einem vordefinierten Solldruck des internen Drucks und einem aktuellen internen Druck des Kraftstofftanks (2) steuert, wobei der aktuelle interne Druck von dem Drucksensor (3P) gemessen wird.

9. Kraftstoffverteilungssystem nach Anspruch 1, wobei der Kraftstoffverdampfer (35) einen Wärmetauscher einschließt.

10. Kraftstoffverteilungssystem nach Anspruch 1, das ferner einen Druckentlastungsmechanismus (4) umfasst, der in der Lage ist, den internen Druck des Kraftstofftanks (2) zu entlasten.

11. Luftfahrzeug (1), das Folgendes umfasst:
ein Flugwerk (10), das einen Rumpf (11) und Tragflächen (12) einschließt;
zumindest ein Antriebssystem (14), das an dem Flugwerk befestigt ist; und
das Kraftstoffverteilungssystem nach einem der Ansprüche 1 bis 10, das dem Antriebssystem flüssigen Wasserstoff zuführt.

## Revendications

1. Système de distribution de carburant pour un aéronef (1), comprenant :
un réservoir de carburant (2) contenant du carburant liquide,
un capteur de pression (3P) qui mesure la pression interne du réservoir de carburant,
une tuyauterie de distribution de carburant (15) par laquelle le carburant liquide est acheminé du réservoir de carburant à une destination de distribution prédéterminée,
une pompe (16) qui est disposée dans la tuyauterie de distribution de carburant et qui fournit du carburant liquide,
une première tuyauterie de retour comprenant une conduite (32), une première vanne de régulation (34) et un vaporisateur de carburant (35), la conduite se ramifiant à partir de la tuyauterie de distribution de carburant en aval d'un point de disposition de la pompe et retournant au réservoir de carburant, la première vanne de régulation régulant le débit ou la pression du carburant liquide, le vaporisateur de carburant vaporisant le carburant liquide, et
un contrôleur (37) qui acquiert une valeur de mesure de la pression interne du réservoir de carburant à partir du capteur de pression et commande la première vanne de régulation ;
**caractérisé en ce que**
le contrôleur (37) commande également le vaporisateur de carburant (35), et
le carburant est de l'hydrogène.

2. Système de distribution de carburant selon la revendication 1, comprenant en outre une deuxième tuyauterie de retour comprenant une conduite (33) se ramifiant à partir de la tuyauterie de distribution de carburant (15) en aval du point de disposition de la pompe (16) et retournant au réservoir de carburant (2), et une deuxième vanne de régulation (36) qui régule le débit ou la pression du carburant liquide.

3. Système de distribution de carburant selon la revendication 1, dans lequel le contrôleur (37) acquiert une valeur de mesure du capteur de pression (3P), règle la première vanne de régulation (34) à un degré d'ouverture prédéterminé lorsque la pression interne chute en dessous d'un seuil prédéterminé et actionne le vaporisateur de carburant (35) pour vaporiser de l'hydrogène liquide passant par la première vanne de régulation.

4. Système de distribution de carburant selon la revendication 1, dans lequel le contrôleur (37) acquiert une valeur de mesure du capteur de pression (3P), calcule une dérivée de la pression interne compte tenu de la valeur de mesure acquise à partir du capteur de pression, et lorsque la dérivée indique un degré de diminution supérieur à un seuil prédéterminé, règle la première vanne de régulation (34) à un degré d'ouverture fonction de la dérivée et actionne le vaporisateur de carburant (35) pour vaporiser de l'hydrogène liquide passant par la première vanne de régulation.

5. Système de distribution de carburant selon la revendication 2, dans lequel la deuxième vanne de régulation (36) s'ouvre lorsque la pression de la tuyauterie de distribution de carburant (15) en aval du point de disposition de la pompe (16) est supérieure ou égale à une pression prédéterminée, et se ferme lorsque la pression de la tuyauterie est inférieure à la pression prédéterminée.

6. Système de distribution de carburant selon la revendication 3, comprenant en outre :
une deuxième tuyauterie de retour comprenant une conduite (33) et une deuxième vanne de régulation (36), la conduite se ramifiant à partir de la tuyauterie de distribution de carburant (15) en aval du point de disposition de la pompe (16) et retournant au réservoir de carburant (2), la deuxième vanne de régulation régulant le débit de carburant liquide,
ladite deuxième vanne de régulation s'ouvrant lorsque la pression de la tuyauterie de distribution de carburant en aval du point de disposition de la pompe est supérieure ou égale à une pression prédéterminée, et se fermant lorsque la pression de la conduite est inférieure à la pression prédéterminée, et
ledit contrôleur (37)
fermant la deuxième vanne de régulation en effectuant une commande d'ouverture de la première vanne de régulation (34) pour diminuer la pression de la conduite, et
ouvrant la deuxième vanne de régulation en effectuant une commande de fermeture de la première vanne de régulation pour augmenter la pression de la tuyauterie lorsque la pression interne remonte au-dessus du seuil prédéterminé.

7. Système de distribution de carburant selon la revendication 1, dans lequel le vaporisateur de carburant (35) comprend un dispositif chauffant électrique.

8. Système de distribution de carburant selon la revendication 7, dans lequel le contrôleur (37) commande une sortie du dispositif chauffant électrique en fonction d'une différence entre une pression cible prédéfinie de la pression interne et une pression interne actuelle du réservoir de carburant (2), la pression interne actuelle étant mesurée par le capteur de pression (3P).

9. Système de distribution de carburant selon la revendication 1, dans lequel le vaporisateur de carburant (35) comprend un échangeur de chaleur.

10. Système de distribution de carburant selon la revendication 1, comprenant en outre un mécanisme de détente de pression (4) capable de détendre la pression interne du réservoir de carburant (2).

11. Aéronef (1), comprenant :
une cellule (10) comprenant un fuselage (11) et des ailes (12),
au moins un système de propulsion (14) fixé à la cellule, et
le système de distribution de carburant selon l'une quelconque des revendications 1 à 10, qui fournit de l'hydrogène liquide au système de propulsion.
